# EUROPÄISCHE PATENTSCHRIFT

(11) **EP 4 050 246 B1**
(45) Veröffentlichungstag und Bekanntmachung des Hinweises auf die Patenterteilung: **18.12.2024**
(21) Anmeldenummer: 22155463.7
(22) Anmeldetag: 07.02.2022
(51) Int. Cl.: F16K 27/04, F16K 31/06

(54) **ELEKTROHYDRAULISCHES DRUCKREGELVENTIL**
ELECTROHYDRAULIC PRESSURE CONTROL VALVE
SOUPAPE ÉLECTROHYDRAULIQUE DE RÉGULATION DE PRESSION

(30) Priorität: 12.02.2021 DE 102021103382
(43) Veröffentlichungstag der Anmeldung: 31.08.2022
(73) Patentinhaber: Thomas Magnete GmbH, 57562 Herdorf (DE)
(72) Erfinder: Zastrau, Thomas, 57076 Siegen (DE); Dr. Schneider, Jörg, 51580 Reichshof (DE); Dr. Krallmann, Jens, 57258 Freudenberg (DE); Buss, Juri, 57537 Wissen (DE)

(56) Entgegenhaltungen:
- DE-A1- 102014 015 559
- DE-A1- 102015 003 554
- DE-A1- 4 423 103
- DE-C2- 4 301 308
- DE-U1- 202010 017 049
- US-A1- 2015 027 573

## Beschreibung

Die Erfindung betrifft ein elektrohydraulisches Druckregelventil entsprechend dem Oberbegriff des ersten Patentanspruchs. Solche Druckregelventile sind als solche bekannt und werden zur Vorsteuerung von Wegeventilen beispielsweise in Baumaschinen, Landmaschinen und Forstmaschinen verwendet.

### Stand der Technik:

Die gebräuchlichen Druckregelventile, wie beispielsweise in den Druckschriften DE 44 23 103 A1 oder DE 20 2010 017 049 beschrieben, weisen eine Ventilhülse auf, die in eine Aufnahmebohrung einer Endkappe eines Wegeventils oder in einen Steuerblock eingeschoben wird. Damit lassen sich große Stückzahlen für unterschiedliche Anwendungen erzielen.

Wenn aber solche Druckregelventile in erheblichen Mengen in kleinen anflanschbaren Steuerblöcken zum Einsatz kommen, die an ein Gerät angeschraubt werden, lassen sich Einsparungen erzielen, indem das Druckregelventil anflanschbar ausgeführt wird und der Steuerblock eingespart wird.

Anflanschbare Ventile sind als solche bekannt, zum Beispiel werden die handelsüblichen Wegeventile der Stationär-Hydraulik überwiegend anflanschbar ausgeführt. Sie werden üblicherweise mittels Montageplatten befestigt. Auch anflanschbare Druckregelventile sind bekannt, beispielsweise beschreibt die Druckschrift DE 10 2012 010 986 A1ein kunststoffumspritztes Druckregelventil einer solchen Bauform. Dieses Druckregelventil soll in dieser Erfindung weiterentwickelt werden, um widerstandsfähiger und präziser zu sein.

### Aufgabe:

Ausgehend von einem sehr widerstandfähigen und präzisen Druckregelventil, wie es in der Druckschrift DE 20 2010 017 04 gezeigt wird, soll das erfindungsgemäße Druckregelventil anflanschbar ausgeführt sein, eine sehr geringe Hysterese aufweisen und kostengünstiger herstellbar sein.

### Lösung:

Die Aufgabe wird durch die Merkmale des unabhängigen Patentanspruchs gelöst. Die Unteransprüche zeigen vorteilhafte Weiterbildungen der Erfindung.

Die Aufgabe wird somit gelöst durch ein elektrohydraulisches Druckregelventil, das ein Ventilgehäuse, einen Elektromagneten mit einem Polkern, einen Magnetanker, und eine Dichtvorrichtung aufweist. Das Ventilgehäuse weist einen Flansch auf, der zum Anflanschen an ein externes Gerät ausgebildet ist. Das externe Gerät muss vorteilhafterweise keine Bohrung oder Ausnehmung für das Druckregelventil aufweisen, sondern es ist eine plane Fläche ausreichen, an die das Druckregelventil angeflanscht werden kann. Somit erlaubt das Druckregelventil eine platzsparende Verbindung mit dem Gerät.

Der Polkern ist innerhalb des Ventilgehäuses angeordnet und liegt zumindest abschnittsweise direkt an einer Innenwand des Ventilgehäuses an. Außerdem verschließt der Polkern eine flanschseitige Öffnung des Ventilgehäuses. Der Polkern dient damit bevorzugt zum fluidischen Anbinden des Druckregelventils an das Gerät. In dem Polkern sind zumindest ein Arbeitsanschluss, ein Druckanschluss und ein Tankanschluss ausgebildet, die zur fluidischen Verbindung mit dem Gerät vorgesehen sind. Durch die Ausbildung des Polkerns innerhalb des Ventilgehäuses und exponiert zur Flanschseite des Ventilgehäuses kann somit ein einfaches Anbinden an das Gerät erfolgen, wobei das Gerät lediglich passende Gegenanschlüsse bereitstellen muss. Eine spezielle Bearbeitung des Geräts, insbesondere das Bereitstellen von Ausnehmungen, ist nicht erforderlich. Die Anbindung der verschiedenen Anschlüsse erfolgt insbesondere in axialer Richtung, d.h. die Fluidströmung tritt bevorzugt in axialer Richtung in das Druckregelventil ein sowie aus diesem aus. Die axiale Richtung ist insbesondere koaxial zur Mittelachse des Ventilgehäuses und/oder Polkerns und/oder Magnetankers und/oder Elektromagneten orientiert.

Der Polkern weist außerdem mehrere Bohrungen auf, die den Tankanschluss, den Druckanschluss und den Arbeitsanschluss fluidisch verbinden. Zumindest in einer der Bohrungen ist ein Ventilschieber geführt, über den wahlweise der Druckanschluss und der Tankanschluss mit dem Arbeitsanschluss verbindbar sowie von dem Arbeitsanschluss trennbar sind. Auf diese Weise ist ein Einstellen unterschiedlicher Fluidflüsse ermöglicht.

Ebenso ist der Magnetanker innerhalb des Ventilgehäuses angeordnet, wobei der Magnetanker von dem Elektromagneten bewegbar ist. Insbesondere stellt der Elektromagnet einen Proportionalmagneten dar. Somit ist das elektrohydraulische Druckregelventil bevorzugt ein proportionalwirkendes elektrohydraulisches Druckregelventil. Der Magnetanker und der Ventilschieber sind bewegungsgekoppelt, wodurch eine Einstellung verschiedener Fluidflüsse durch das Ventil mittels des Elektromagneten erfolgen kann.

Die Dichtvorrichtung ist an dem Polkern angebracht und zum Anlegen an das Gerät ausgebildet. Die Dichtvorrichtung dient zur Abdichtung der Verbindungen von Druckanschluss und/oder Tankanschluss und/oder Arbeitsanschluss mit dem Gerät gegenüber einander und/oder gegenüber der Umgebung. Besonders vorteilhaft weist somit zumindest ein Abschnitt der Dichtvorrichtung, insbesondere jeder Abschnitt der Dichtvorrichtung, jeweils eine Seite, die exponiert gegenüber dem Druckanschluss oder Tankanschluss oder Arbeitsanschluss ist, sowie eine gegenüberliegende Seite auf, die exponiert gegenüber einem anderen der Anschlüsse oder der Umgebung ist.

Die Dichtvorrichtung ist außerdem ausgebildet, einen Kontaktbereich zwischen dem Ventilgehäuse und dem Polkern abzudichten. Auf diese Weise ist ein Eindringen von Fluid zwischen Polkern und Ventilgehäuse verhindert oder zumindest erschwert. Auf diese Weise ist insbesondere nicht notwendig, die Komponenten innerhalb des Ventilgehäuses mit speziellen Maßnahmen gegen Korrosion zu schützen. Dadurch ist der Aufbau des Druckregelventils einfach und die Herstellung des Druckregelventils kostengünstig.

Bevorzugt weist der Polkern an einem äußeren Rand eine Fase oder eine Ausnehmung auf. Der äußere Rand des Polkerns ist bevorzugt ein solcher Bereich, der an dem Ventilgehäuse anliegt. Außerdem ist bevorzugt vorgesehen, dass die Fase oder Ausnehmung zum Gerät hinweist. Durch die Ausnehmung oder Fase ist eine Nut gebildet, die einerseits durch den Polkern und anderseits durch das Ventilgehäuse begrenzt ist. Die Dichtvorrichtung ist zumindest teilweise in der Nut angeordnet. Dadurch ist die zuvor beschriebene Dichtwirkung vorteilhaft erreicht. Außerdem ist ein Verrutschen der Dichtvorrichtung im Betrieb des Druckregelventils verhindert oder zumindest erschwert. Damit ist eine dauerhafte Dichtwirkung gewährleistet.

Der Polkern ist bevorzugt einstückig ausgebildet. Da keine speziellen Maßnahmen zum Korrosionsschutz notwendig sind, wie zuvor beschrieben wurde, ist somit auch kein Zusatzelement zwischen Polkern und Ventilgehäuse einzubringen. Vielmehr kann der Polkern bevorzugt direkt an dem Ventilgehäuse anliegen. Somit ist einerseits die Herstellung des Polkerns vereinfacht, da dieser lediglich ein einzelnes Stück ist, während außerdem die Montage des Druckregelventils vereinfacht ist, da lediglich der Polkern ohne ein Zusatzelement zu montieren ist.

Bevorzugt ist außerdem vorgesehen, dass die Dichtvorrichtung einstückig ausgebildet ist. Die Dichtvorrichtung ist insbesondere eine Flachdichtung, die aus einem einzelnen Stück besteht. Somit ist wiederum die Montage des Druckregelventils vereinfacht.

Der Polkern weist in einer vorteilhaften Ausgestaltung einen nutförmigen Dichtungsführungsbereich auf, der sich ringförmig um den Arbeitsanschluss erstreckt. Dabei handelt es sich besonders vorteilhaft um eine Eindrehung. Der Polkern ist hierzu bevorzugt als Drehteil hergestellt, wobei der Arbeitsanschluss insbesondere auf der Drehachse vorgesehen ist. Die Dichtvorrichtung ist zumindest teilweise in dem Dichtungsführungsbereich angeordnet. Somit ist ein Verrutschen oder Verschieben der Dichtvorrichtung verhindert oder zumindest erschwert. Somit wird die Dichtvorrichtung insbesondere auch dann an dem vorgesehenen Platz gehalten, wenn auf verschiedenen Seiten der Dichtvorrichtung unterschiedliche Fluiddrücke wirken. Da der Arbeitsanschluss wahlweise mit dem Tankanschluss und dem Druckanschluss oder mit keinem der Anschlüsse verbunden werden kann, liegen somit am Arbeitsanschluss stets wechselnde Drücke an. Durch den Dichtungsführungsbereich ist ein Verschieben der Dichtvorrichtung trotz der wechselnden Drücke verhindert oder zumindest erschwert.

Die Bohrungen weisen bevorzugt eine erste Bohrung, eine zweite Bohrung und eine dritte Bohrung auf. Die erste Bohrung ist zur Aufnahme des Ventilschiebers ausgebildet und mit dem Arbeitsanschluss fluidverbunden. Besonders bevorzugt erstreckt sich die erste Bohrung entlang einer Mittelachse des Polkerns. Die zweite Bohrung ist mit dem Tankanschluss fluidverbunden und die dritte Bohrung ist mit dem Druckanschluss fluidverbunden. Durch die Bewegung des Ventilschiebers lassen sich somit unterschiedliche Verbindungen der Bohrungen herstellen und damit unterschiedliche Durchflüsse zwischen den einzelnen Anschlüssen herstellen.

Besonders vorteilhaft sind an der ersten Bohrung eine erste Ausdrehung und eine von der ersten Ausdrehung getrennte zweite Ausdrehung ausgebildet. Somit ist ein Durchmesser der ersten Bohrung an der ersten Ausdrehung und der zweiten Ausdrehung vergrößert. Die zweite Bohrung reicht bis in die erste Ausdrehung, während die dritte Bohrung bis in die zweite Ausdrehung reicht. Die zweite Bohrung und die dritte Bohrung sind somit bevorzugt schräg zur ersten Bohrung orientiert. Auf diese Weise sind die erste Bohrung, die zweite Bohrung und die dritte Bohrung einfach und zuverlässig miteinander verbunden.

Weiter ist besonders vorteilhaft vorgesehen, dass die zweite Bohrung eine Länge zwischen 9,0 mm und 15,0 mm, insbesondere von 11,5 mm, und/oder gegenüber der ersten Bohrung einen Winkel zwischen 10° und 30°, insbesondere von 20°, aufweist. Die dritte Bohrung weist besonders vorteilhaft eine Länge zwischen 5,0 mm und 11,0 mm, insbesondere von 7,5 mm, und/oder gegenüber der ersten Bohrung einen Winkel zwischen 20° und 40°, insbesondere von 30°, auf. Durch eine derartige Ausgestaltung lässt sich eine optimale Strömung von Fluids durch das Druckregelventil erreichen, wobei ein Druckabfall innerhalb des Druckregelventils optimiert ist.

In einer alternativen vorteilhaften Ausgestaltung weisen die Bohrungen eine vierte Bohrung zur Verbindung von erster Bohrung und zweiter Bohrung sowie eine fünfte Bohrung zur Verbindung von erster Bohrung und dritter Bohrung auf. Die zweite Bohrung und die dritte Bohrung sind somit bevorzugt parallel zu der ersten Bohrung orientiert. Das Ausbilden von Ausdrehungen wie zuvor beschrieben ist nicht notwendig.

Die vierte Bohrung und die fünfte Bohrung sind vorteilhafterweise quer, insbesondere senkrecht, zur ersten Bohrung orientiert. An einer Außenfläche des Polkerns sind die vierte Bohrung und die fünfte Bohrung verschlossen. Somit ist ein unerwünschtes Austreten von Fluid aus der vierten Bohrung und der fünften Bohrung vermieden. Das Verschließen der vierten Bohrung und fünften Bohrung erfolgt vorteilhafterweise durch jeweils eine Laserschweißnaht. Insbesondere ist für jede der Bohrungen eine eigene, besonders vorteilhaft um den Polkern umlaufende, Laserschweißnaht vorgesehen. Die jeweilige Laserschweißnaht dient insbesondere außerdem zur Verbindung von des Polkerns mit einer den Polkern in Umfangsrichtung umgebenden Druckhülse. Diese Verbindung dient gleichzeitig zur Abdichtung zwischen Polkern und Druckhülse, so dass eine zusätzliche Dichtung wie beispielsweise ein O-Ring nicht notwendig ist.

Der Ventilschieber weist insbesondere einen ersten Querschnitt zur Herstellung einer Fluidverbindung des Arbeitsanschlusses mit dem Tankanschluss oder mit dem Druckanschluss auf. Außerdem weist der Ventilschieber insbesondere einen zweiten Querschnitt zur Fluidtrennung des Arbeitsanschlusses von dem Tankanschluss oder von dem Druckanschluss auf. Der erste Querschnitt weist bevorzugt eine Bohrung auf und bildet insbesondere einen fluiddurchströmbaren Verbindungsquerschnitt zwischen 2,5 mm² und 5,0 mm², bevorzugt von 3,2 mm². Durch den Verbindungsquerschnitt ist Fluid zwischen Arbeitsanschluss und Tankanschluss sowie Druckanschluss und Arbeitsanschluss strömbar. Durch eine Ausgestaltung des Verbindungsquerschnitts wie zuvor beschrieben, lässt sich insbesondere ein Durchfluss von 2 Litern pro Minute bei einer Druckdifferenz von 2.7 bar erreichen. Somit ist der erste Querschnitt strömungstechnisch bezüglich der Fluidströmung durch das Druckregelventil optimiert. Der Polkern weist bevorzugt eine Länge auf, die maximal 60% einer Gesamtlänge von Polkern und Magnetanker beträgt. Somit ist eine Länge des Magnetankers optimiert, da der Magnetanker durch eine entsprechende Ausgestaltung seiner Länge eine optimierte Menge an Streufluss auffangen kann der, von dem Magnetfeld des Elektromagneten stammt. Dadurch lässt sich eine maximale Magnetkraft generieren. Die Gesamtlänge von Magnetanker und Polkern ist dabei insbesondere durch das Ventilgehäuse beschränkt.

Bevorzugt ist außerdem vorgesehen, dass der Magnetanker und/oder Ventilschieber entlang einer Axialrichtung bewegbar sind. Die Axialrichtung ist insbesondere koaxial zu einer Mittelachse des Druckregelventils orientiert. Der Polkern steht bezüglich der Axialrichtung bevorzugt nicht über Flansch vor. Somit ragt der Polkern nicht in das Gerät hinein, wenn das Druckregelventil an das Gerät angebunden ist. Dies ermöglicht eine einfache Ausgestaltung des Geräts, sodass für die Anbindung des Druckregelventils keine aufwändigen Bearbeitungen oder Formgebung des Geräts notwendig sind.

Das Druckregelventil ist insbesondere geeignet, einen Vorsteuerdruck für ein nachgeschaltetes Wegeventil oder für eine Hilfsaufgabe der zu steuernden Maschine entsprechend einem elektrischen Steuersignal einzuregeln.

Das Steuersignal liegt vorzugsweise als geregelter elektrischer Strom vor und wird in einem Elektromagneten, der Teil des Druckregelventils ist, in eine Kraft gewandelt, die wegen der besonderen Ausführung, aber bekannten Ausführung des Elektromagneten, insbesondere wegen der Formgebung des Magnetpols dieses Elektromagneten, zu dem elektrischen Strom vorteilhafterweise proportional ist, auch bei unterschiedlich großen Hüben des Magnetankers.

Die Kraft wird von dem Magnetanker insbesondere mittels eines Stößels auf einen Ventilschieber übertragen. An diesem Ventilschieber wird die Kraft des Magnetankers mit der hydraulischen Kraft verglichen, die sich aus dem Druck auf die mit dem Arbeitsanschluss verbundene Stirnfläche des Ventilschiebers und der Größe dieser Stirnfläche ergibt.

Überschreitet die Druckkraft des Drucks am Arbeitsanschluss des Ventils die Kraft des Magnetankers, verschiebt sich der Ventilschieber in die Richtung zum Elektromagneten und gibt einen variablen Querschnitt für eine Flüssigkeitsströmung von dem Arbeitsanschluss zum Tankanschluss frei. Als Folge davon vermindert sich der Druck am Arbeitsanschluss. Wenn aber die Kraft des Magnetankers die Druckkraft des Drucks am Arbeitsanschluss überschreitet, verschiebt sich der Ventilschieber von dem Elektromagneten weg und gibt einen zweiten variablen Querschnitt für eine Flüssigkeitsströmung von dem Druckanschluss zum Arbeitsanschluss frei. Als Folge davon erhöht sich der Druck am Arbeitsanschluss. Befinden sich die Kraft des Magnetankers und die Druckkraft im Gleichgewicht, so stellt sich mittels einer Feder eine Mittelstellung des Ventilschiebers ein, in der sich keine Flüssigkeitsströmung zum oder von dem Arbeitsanschluss bildet.

Die beschriebene Regelfunktion erfolgt dann, wenn an dem Druckanschluss ein ausreichender Versorgungsdruck und eine geeignete Durchflussmenge der Druckflüssigkeit zur Verfügung stehen. Außerdem ist vorteilhaft, wenn am Tankanschluss ein recht niedriger Druck ansteht und der am Arbeitsanschluss angeschlossene Verbraucher nur einen geringen Volumenstrom abnimmt.

Die Freigabe von variablen Querschnitten für die Flüssigkeitsströmungen erfolgt bevorzugt durch das Zusammenwirken von innenliegenden Steuerkanten des Ventilschiebers mit außenliegenden Steuerkanten in dem den Ventilschieber umgebenden Magnetpol. Vorzugsweise wird immer nur einer von den beiden variablen Querschnitten freigegeben, aber es ist auch eine Bauform möglich, bei der die beiden variablen Querschnitte gleichzeitig wirken, dies wird durch die sogenannte Überdeckung der Steuerkanten eingestellt.

Die außenliegenden Steuerkanten sind bevorzugt Bestandteile von Ausdrehungen oder Querbohrungen im Magnetpol, und diese Hohlräume stehen über Längsbohrungen mit dem Druckanschluss und dem Tankanschluss in Verbindung. Die Längsbohrungen sind bei der Anwendung von Ausdrehungen vorteilhafterweise in einem geringen Winkel relativ zur Bohrung für den Ventilschieber angeordnet, damit die Anschlüsse in der Anflanschfläche einen ausreichend großen Abstand voneinander haben.

In der Anflanschfläche des Druckregelventils an das übergeordnete Gerät werden die der Arbeitsanschluss, der Druckanschluss und der Tankanschluss zueinander und gegen die Umgebung abgedichtet. Das erfolgt vorteilhafterweise durch eine gemeinsame Flachdichtung, die für die Anschlüsse Durchlässe aufweist, oder durch zumindest drei O-Ringe, die in bekannter Weise gekammert sind, weil sie in passende kreisförmige Nuten eingelegt sind.

Das erfindungsgemäße Druckregelventil ist sehr widerstandsfähig, weil es ein auch den Ventilteil umfassendes Magnetgehäuse, bevorzugt aus tiefgezogenem Eisen, aufweist, und es arbeitet bei der Regelung des Druckes sehr präzise, weil es zwei variable Querschnitte zur Verstellung der Flüssigkeitsströmungen aufweist.

Die Hysterese des Druckregelventils ist sehr gering, insbesondere weil der Magnetanker von dem Ventilschieber sehr genau relativ zum Magnetpol geführt wird, denn der Ventilschieber und der den Magnetanker tragenden Stößel sind vorteilhafterweise einstückig ausgeführt, und der Ventilschieber gleitet mit sehr geringem Spiel im Magnetpol. Alternativ ist ein Gelenkkopf vorgesehen. Dabei ist dieses gemeinsame Bauteil vorteilhafterweise aus einem sehr wenig magnetisierbaren Material hergestellt, beispielsweise aus Messing oder aus austenitischem Stahl, damit sich kein magnetischer Kurzschluss zur Überbrückung des Luftspalts ergibt.

Darüber hinaus ist das Druckregelventil anflanschbar, weil der Ventilteil des Druckregelventils vollständig von dem Magnetgehäuse des Proportionalmagneten umfasst wird und damit der Flansch des Magnetgehäuses die Länge der gesamten Vorrichtung begrenzt. Eine Einbaubohrung in dem Gerät, an das das Druckregelventil angeflanscht wird, ist nicht erforderlich.

Es ergibt sich eine erhebliche Kostenreduzierung der aus dem Druckregelventil und dem übergeordneten Gerät bestehenden Anlage, weil entweder auf eine Einbaubohrung in das Gerät oder auf einen zusätzlichen anflanschbaren Steuerblock mit Einbaubohrung verzichtet werden kann.

### Anwendung:

Druckregelventile der beschriebenen Art werden zur elektrohydraulischen Vorsteuerung von proportionalwirkenden Wegeventilen und zur Steuerung von Nebenfunktionen in der Mobilhydraulik verwendet, beispielsweise in Landmaschinen, Baumaschinen und Forstmaschinen. Es sind auch Anwendungen zur Verstellung von hydrostatischen Pumpen bekannt.

### Figuren:

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: das erfindungsgemäße Druckregelventil nach einem ersten Ausführungsbeispiel mit Ausdrehungen der Bohrung zur Führung des Ventilschiebers, und
- Fig. 2: das erfindungsgemäße Druckregelventil nach einem zweiten Ausführungsbeispiel mit Querbohrungen.

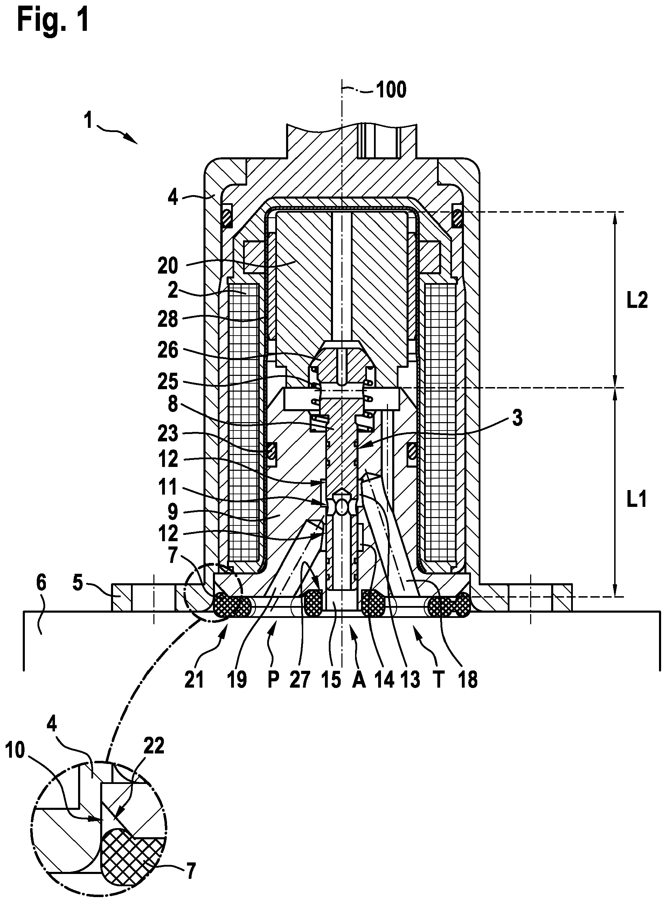

Das proportionalwirkende elektrohydraulische Druckregelventil 1 ist in Fig. 1 gemäß einem ersten Ausführungsbeispiel dargestellt und weist ein Ventilgehäuse, einen Elektromagneten 2, der einen elektrischen Strom in eine proportionale Kraft wandelt, und einem Ventilteil 3 auf, das die genannte Kraft in einen geregelten hydraulischen Druck wandelt.

Der Elektromagnet 2 ist gebildet aus einer Spule, einem Joch und einem Polkern 9, wobei der Elektromagnet 2 innerhalb des einem Ventilgehäuse 4 angeordnet ist, das als Eisenrückschluss dient. Durch den Elektromagnet 2 ist ein Magnetanker 20 bewegbar.

Auch das Ventilteil 3 ist von dem Ventilgehäuse 4 vollständig umschlossen.

Ein an das Magnetgehäuse 4 angeformter Flansch 5 verbindet das Druckregelventil 1 mit einem übergeordneten Gerät 6.

Der Ventilteil 3 enthält einen in einer ersten Bohrung 15 des Polkerns 9 beweglichen Ventilschieber 8, der von einem auf die dem Elektromagneten 2 abgewandte Stirnfläche des Ventilschiebers 8 wirkenden Druck einerseits und von der Kraft des Elektromagneten 2 andererseits beaufschlagt ist und mittels eines ersten Querschnitts 11 eine Verbindung zwischen einem am Polkern 9 ausgebildeten Arbeitsanschluss A und einem am Polkern ausgebildeten Tankanschluss T und/oder eine Verbindung zwischen einem am Polkern 9 ausgebildeten Druckanschluss P und dem Arbeitsanschluss A herstellt. Mittels eines zweiten Querschnitts 12 trennt der Ventilschieber den Arbeitsanschluss von dem Druckanschluss und/oder dem Tankanschluss.

In Fig. 1 ist ein Zustand gezeigt, in dem eine Verbindung zwischen Tankanschluss T und Arbeitsanschluss A hergestellt ist, wobei die Verbindung zwischen Druckanschluss und Arbeitsanschluss getrennt ist.

Der Polkern 9 umschließt den beweglichen Ventilschieber 8 und weist alle unbeweglichen Bestandteile des Ventilteils 3 auf, nämlich die mit dem Arbeitsanschluss A verbundene erste Bohrung 15, die außenliegenden Steuerkanten zum Zusammenwirken mit dem ersten Querschnitt 11 und zweiten Querschnitt 12 sowie eine zweite Bohrung 18 zur Verbindung des Tankanschlusses T mit der ersten Bohrung 15 und eine dritte Bohrung 19 zur Verbindung des Druckanschlusses P mit der ersten Bohrung 15.

Der Magnetanker 20 ist mittels eines Stößels oder über einen Gelenkkopf 26 mit dem Ventilschieber 8 verbunden, wobei der Stößel und der Ventilschieber 8 bevorzugt einstückig ausgeführt sind und der Magnetanker 20 insbesondere durch den Ventilschieber 8 geführt wird.

Das Bauteil, das die Funktionen des Stößels und des Ventilschiebers 8 erfüllt, ist bevorzugt aus Messing oder aus einem austenitischen Stahl hergestellt.

In dem ersten Ausführungsbeispiel wirken die Querschnitte 11 und 12 des Ventilschiebers 8 mit einer ersten Ausdrehung 13 und einer zweiten Ausdrehung 14 der ersten Bohrung 15 zusammen, um Flüssigkeitsströmungen von dem Arbeitsanschluss A zum Tankanschluss T oder von dem Druckanschluss P zum Arbeitsanschluss A freizugeben.

Die erste Ausdrehung 13 ist durch die zweite Bohrung 18 mit dem Tankanschluss T und die zweite Ausdrehung (14) ist durch die dritte Bohrung 19 mit dem Druckanschluss P verbunden.

Der Magnetanker 20 und der Ventilschieber 8 sind entlang einer Axialrichtung 100 bewegbar, die koaxial zu einer Mittelachse des Drucksteuerventils 1 orientiert ist. Die erste Bohrung 15 erstreckt sich im ersten Ausführungsbeispiel entlang der Axialrichtung 100, während die zweite Bohrung 18 und die dritte Bohrung 19 gegenüber der ersten Bohrung 15 abgewinkelt sind. Die zweite Bohrung weist eine Länge zwischen 9,0 mm und 15,0 mm, insbesondere von 11,5 mm auf. Die dritte Bohrung weist eine Länge zwischen 5,0 mm und 11,0 mm, insbesondere von 7,5 mm. Die zweite Bohrung 18 weist außerdem gegenüber der ersten Bohrung 15 einen Winkel zwischen 10° und 30°, insbesondere von 20°, auf. Die dritte Bohrung weist gegenüber der ersten Bohrung 15 einen Winkel zwischen 20° und 40°, insbesondere von 30°, auf. Der erste Querschnitt 11 weist eine Bohrung quer zur Axialrichtung 100 auf und bildet einen fluiddurchströmbaren Verbindungsquerschnitt zwischen 2,5 mm² und 5,0 mm², bevorzugt von 3,2 mm². Durch den Verbindungsquerschnitt ist Fluid zwischen Arbeitsanschluss A und Tankanschluss T sowie Druckanschluss P und Arbeitsanschluss A strömbar. Durch eine Ausgestaltung des Verbindungsquerschnitts wie zuvor beschrieben, lässt sich ein Durchfluss von 2 Litern pro Minute bei einer Druckdifferenz von 2.7 bar erreichen. Durch eine derartige Ausgestaltung lässt sich eine optimale Strömung von Fluids durch das Druckregelventil erreichen, wobei ein Druckabfall innerhalb des Druckregelventils optimiert ist.

Der Polkern 9 weist eine erste Länge L1 und der Magnetanker 20 weist eine zweite Länge L2 auf. Die erste Länge L1 weist maximal 60% einer Gesamtlänge L1+L2 von Polkern 9 und Magnetanker 20 auf. Durch diese zweite Länge L2 ist es dem Magnetanker 20 ermöglicht, eine große Menge an Streufluss aufzufangen, die von dem Magnetfeld des Elektromagneten 2 stammt. Dadurch lässt sich eine maximale Magnetkraft generieren.

Außerdem ist eine Dichtvorrichtung 7 vorhanden. Die Dichtvorrichtung 7 ist eine einstückige Dichtung, insbesondere eine Flachdichtung, und erfüllt mehrere Funktionen. Einerseits ist die Dichtvorrichtung 7 ausgebildet, an das Gerät 6 angelegt zu werden um die Fluidverbindungen von Tankanschluss T, Arbeitsanschluss A und Druckanschluss P mit dem Gerät 6 gegenüber einander und gegenüber der Umgebung abzudichten. Außerdem dient die Dichtvorrichtung 7 dazu, einen Kontaktbereich zwischen Polkern 9 und Ventilgehäuse 4 abzudichten. Dazu weist der Polkern 9 eine Fase 22 oder eine Ausnehmung auf, die eine Nut 10 bildet. Die Nut 10 wird einerseits von dem Polkern 9, andererseits von dem Ventilgehäuse 4 begrenzt. Die Dichtvorrichtung 7 ist zumindest teilweise in der Nut 10 angeordnet und dichtet somit den Kontaktbereich zwischen Polkern 9 und Ventilgehäuse 4 ab. Damit ist ein Eindringen von Fluid zwischen Ventilgehäuse 4 und Polkern 9 verhindert oder, wodurch keine besonderen Korrosionsschutzmaßnahmen innerhalb des Ventilgehäuses 4 notwendig sind. Außerdem ist auf diese Weise ermöglicht, den Polkern 9 einstückig auszubilden und unmittelbar an das Ventilgehäuse 4 anzulegen.

Außerdem ist ein nutförmiger Dichtungsführungsbereich 27 um den Arbeitsanschluss A vorgesehen, der zum zumindest teilweisen Aufnehmen der Dichtvorrichtung 7 dient. Dadurch ist ein Verschieben der Dichtvorrichtung 7 erschwert. Dies insbesondere daher vorteilhaft, da an dem Arbeitsanschluss A stets wechselnde Drücke anliegen.

Der Polkern 9 ist außerdem über eine Zusatzdichtung 23 gegenüber einer umliegenden Druckhülse 28 abgedichtet. Eine zwischen Polkern 9 und Magnetanker 20 angeordnete Feder 25 stellt sicher, dass der Magnetanker 20 bei Wegfall des Magnetfelds von dem Elektromagneten 2 in eine Ausgangsstellung überführt wird, in der der Ventilschieber 8 den Arbeitsanschluss A mit dem Tankanschluss T verbindet.

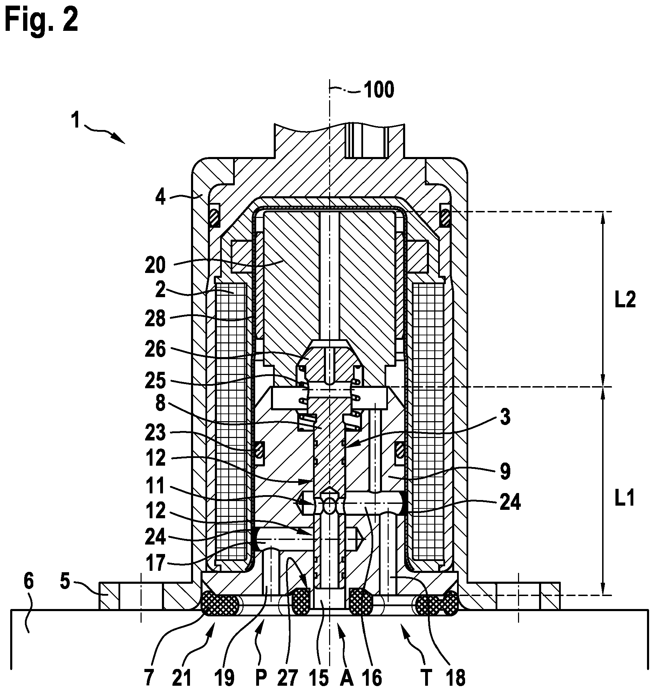

In einem zweiten Ausführungsbeispiel wie in Fig. 2 gezeigt unterscheidet sich das Druckregelventil 1 von dem ersten Ausführungsbeispiel lediglich in der Ausgestaltung des Polkerns 9. In dem zweiten Ausführungsbeispiel sind zusätzlich zu der ersten Bohrung 15, der zweiten Bohrung 18 und der dritten Bohrung 19 eine vierte Bohrung 16 und eine fünfte Bohrung 17 vorhanden. Die erste Bohrung 15, die zweite Bohrung 18 und die dritte Bohrung 19 sind bevorzugt parallel zueinander orientiert und vorteilhafterweise parallel zur Axialrichtung 100. Die vierte Bohrung 16 dient zum Verbinden von erster Bohrung 15 und zweiter Bohrung 18, die fünfte Bohrung 17 dient zum Verbinden von erster Bohrung 15 und dritter Bohrung 19. Die zuvor beschriebene erste Ausdrehung 13 und zweite Ausdrehung 14 sind nicht notwendigerweise auszubilden. Bevorzugt sind die vierte Bohrung 16 und die fünfte Bohrung 17 senkrecht zur ersten Bohrung 15 orientiert.

Um zu verhindern, dass Fluid ungewollt aus dem Polkern 9 austritt, sind die vierte Bohrung 16 und die fünfte Bohrung 17 an einer Außenfläche des Polkerns 9 abgedichtet. Bevorzugt erfolgt diese Abdichtung durch jeweils eine Laserschweißnaht 24. Jede Laserschweißnaht 24 ist bevorzugt umlaufend um den Polkern 9 realisiert und verschweißt den Polkern 9 mit der Druckhülse 28. Somit kann alternativ zu der Darstellung in Figur 2 die Zusatzdichtung 23 entfallen, da durch die jeweilige Laserschweißnaht 24 eine Dichtwirkung bereits realisiert ist.

In allen Fällen steht der Polkern 9 in Axialrichtung 100 nicht über den Flansch 5 vor. Damit kann das Druckregelventil 1 direkt an das Gerät 6 angelegt werden, ohne dass an dem Gerät 6 spezielle Ausnehmungen für das Druckregelventil vorzusehen sind.

Neben der vorstehenden schriftlichen Beschreibung der Erfindung wird zu deren ergänzender Offenbarung hiermit explizit auf die zeichnerische Darstellung der Erfindung in den Fig. 1 und 2 Bezug genommen.

### Bezugszeichenliste

- 1: Druckregelventil
- 2: Elektromagnet
- 3: Ventilteil
- 4: Ventilgehäuse
- 5: Flansch
- 6: Gerät
- 7: Dichtvorrichtung
- 8: Ventilschieber
- 9: Polkern
- 10: Nut
- 11: erster variabler Querschnitt
- 12: zweiter variabler Querschnitt
- 13: erste Ausdrehung
- 14: zweite Ausdrehung
- 15: erste Bohrung
- 16: vierte Bohrung
- 17: fünfte Bohrung
- 18: zweite Bohrung
- 19: dritte Bohrung
- 20: Magnetanker
- 21: Öffnung des Ventilgehäuses
- 22: Fase
- 23: Zusatzdichtung
- 24: Laserschweißnaht
- 25: Feder
- 26: Gelenkkopf
- 27: Dichtungsführungsbereich
- 28: Druckhülse
- A: Arbeitsanschluss
- P: Druckanschluss
- T: Tankanschluss

## Patentansprüche

1. Elektrohydraulisches Druckregelventil (1), aufweisend
• ein Ventilgehäuse (4) mit einem Flansch (5), der zum Anflanschen an ein Gerät (6) ausgebildet ist,
• einen innerhalb des Ventilgehäuses (4) angeordneten Elektromagneten (2) mit einem Polkern (9),
∘ wobei der Polkern (9) innerhalb des Ventilgehäuses (4) angeordnet ist und zumindest abschnittsweise direkt an einer Innenwand des Ventilgehäuses (4) anliegt,
∘ wobei der Polkern (9) eine flanschseitige Öffnung (21) des Ventilgehäuses (4) verschließt,
∘ wobei in dem Polkern (9) zumindest ein Arbeitsanschluss (A), ein Druckanschluss (P) und ein Tankanschluss (T) ausgebildet sind, die zur fluidischen Verbindung mit dem Gerät (6) vorgesehen sind,
∘ wobei der Polkern (9) mehrere Bohrungen (15, 16, 17, 18, 19) aufweist, die den Tankanschluss (T), den Druckanschluss (P) und den Arbeitsanschluss (A) fluidisch verbinden, und
∘ wobei zumindest in einer der Bohrungen (15, 16, 17, 18, 19) ein Ventilschieber (8) geführt ist, über den wahlweise der Druckanschluss (P) und der Tankanschluss (T) mit dem Arbeitsanschluss (A) verbindbar sowie von dem Arbeitsanschluss (A) trennbar sind,
• einen innerhalb des Ventilgehäuses (4) angeordneten und von dem Elektromagneten (2) bewegbaren Magnetanker (20), wobei der Magnetanker (20) mit dem Ventilschieber (8) bewegungsgekoppelt ist, und
• eine Dichtvorrichtung (7), die
∘ an dem Polkern (9) angebracht und zum Anlegen an das Gerät (6) ausgebildet ist, und
∘ die zur Abdichtung der Verbindungen von Druckanschluss (P) und/oder Tankanschluss (T) und/oder Arbeitsanschluss (A) mit dem Gerät (6) gegenüber einander und/oder gegenüber der Umgebung ausgebildet ist,
**dadurch gekennzeichnet, dass**
• die Dichtvorrichtung (7) ausgebildet ist, einen Kontaktbereich zwischen dem Ventilgehäuse (4) und dem Polkern (9) abzudichten, so dass ein Eindringen von Fluid zwischen Polkern (9) und Ventilgehäuse (4) verhindert ist.

2. Druckregelventil (1) nach Anspruch 1, **dadurch gekennzeichnet, dass** der Polkern (9) an einem äußeren Rand eine Fase (22) oder eine Ausnehmung aufweist, durch die eine durch Polkern (9) und Ventilgehäuse (4) begrenzte Nut (10) gebildet ist, wobei die Dichtvorrichtung (7) zumindest teilweise in der Nut (10) angeordnet ist.

3. Druckregelventil (1) nach Anspruch 1 oder 2, **dadurch gekennzeichnet, dass** der Polkern (9) einstückig ausgebildet ist.

4. Druckregelventil (1) nach einem der vorhergehenden Ansprüche, **dadurch gekennzeichnet, dass** die Dichtvorrichtung (7) einstückig ausgebildet ist.

5. Druckregelventil (1) nach einem der vorhergehenden Ansprüche, **dadurch gekennzeichnet, dass** der Polkern (9) einen nutförmigen Dichtungsführungsbereich (27) aufweist, der sich ringförmig um den Arbeitsanschluss (A) erstreckt, wobei die Dichtvorrichtung (7) zumindest teilweise in dem Dichtungsführungsbereich (27) angeordnet ist.

6. Druckregelventil (1) nach einem der vorhergehenden Ansprüche, **dadurch gekennzeichnet, dass** die Bohrungen (15, 16, 17, 18, 19) eine erste Bohrung (15), eine zweite Bohrung (18) und eine dritte Bohrung (19) aufweisen, wobei die erste Bohrung (15) zur Aufnahme des Ventilschiebers (8) ausgebildet und mit dem Arbeitsanschluss (A) fluidverbunden ist, wobei die zweite Bohrung (18) mit dem Tankanschluss (T) fluidverbunden ist und wobei die dritte Bohrung (19) mit dem Druckanschluss (P) fluidverbunden ist.

7. Druckregelventil (1) nach Anspruch 6, **dadurch gekennzeichnet, dass** an der ersten Bohrung (15) eine erste Ausdrehung (13) und eine von der ersten Ausdrehung (13) getrennte zweite Ausdrehung (14) ausgebildet sind, wobei die zweite Bohrung (18) bis in die erste Ausdrehung (13) reicht, wobei die dritte Bohrung (19) bis in die zweite Ausdrehung (14) reicht, und wobei bevorzugt die zweite Bohrung (18) und die dritte Bohrung (19) schräg zur ersten Bohrung (15) orientiert sind.

8. Druckregelventil (1) nach Anspruch 7, **dadurch gekennzeichnet, dass** die zweite Bohrung (18) eine Länge zwischen 9,0 mm und 15,0 mm und/oder gegenüber der ersten Bohrung (15) einen Winkel zwischen 10° und 30° aufweist, und/oder dass die dritte Bohrung (19) eine Länge zwischen 5,0 mm und 11,0 mm und/oder gegenüber der ersten Bohrung (15) einen Winkel zwischen 20° und 40° aufweist.

9. Druckregelventil (1) nach Anspruch 8, **dadurch gekennzeichnet, dass** die zweite Bohrung (18) eine Länge von 11,5 mm, und/oder gegenüber der ersten Bohrung (15) einen Winkel von 20° aufweist, und/oder dass die dritte Bohrung (19) eine Länge von 7,5 mm, und/oder gegenüber der ersten Bohrung (15) einen Winkel von 30°, aufweist.

10. Druckregelventil (1) nach Anspruch 6, **dadurch gekennzeichnet, dass** die Bohrungen (15, 16, 17, 18, 19) eine vierte Bohrung (16) zur Verbindung von erster Bohrung (15) und zweiter Bohrung (18) sowie eine fünfte Bohrung (17) zur Verbindung von erster Bohrung (15) und dritter Bohrung (19) aufweisen, wobei die zweite Bohrung (18) und die dritte Bohrung (19) parallel zu der ersten Bohrung (15) orientiert sind.

11. Druckregelventil (1) nach Anspruch 10, **dadurch gekennzeichnet, dass** die vierte Bohrung (16) und die fünfte Bohrung (17) quer zur ersten Bohrung (15) orientiert sind, wobei die vierte Bohrung (16) und die fünfte Bohrung (17) an einer Außenseite des Polkerns (9) durch eine Laserschweißnaht (24) verschlossen sind, und wobei das Verschließen der vierten Bohrung (16) und der fünften Bohrung (17) durch zumindest eine Laserschweißnaht (24) erfolgt, die zur stoffschlüssigen Verbindung von Polkern (9) und einer den Polkern (9) zumindest teilweise umschließenden Druckhülse (28) ausgebildet ist.

12. Druckregelventil (1) nach einem der vorhergehenden Ansprüche, **dadurch gekennzeichnet, dass** der Ventilschieber (8) einen ersten Querschnitt (11) zur Herstellung einer Fluidverbindung des Arbeitsanschlusses (A) mit dem Tankanschluss (T) oder mit dem Druckanschluss (P) sowie einen zweiten Querschnitt (12) zur Fluidtrennung des Arbeitsanschlusses (A) von dem Tankanschluss (T) oder von dem Druckanschluss (P) aufweist, wobei der erste Querschnitt (12) einen fluiddurchströmbaren Verbindungsquerschnitt zwischen 2,5 mm² und 5,0 mm² bildet.

13. Druckregelventil (1) nach Anspruch 12, **dadurch gekennzeichnet, dass** der erste Querschnitt (12) einen fluiddurchströmbaren Verbindungsquerschnitt von 3,2 mm² bildet.

14. Druckregelventil (1) nach einem der vorhergehenden Ansprüche, **dadurch gekennzeichnet, dass** der Polkern (9) eine Länge aufweist, die maximal 60% einer Gesamtlänge von Polkern (9) und Magnetanker (20) beträgt.

15. Druckregelventil (1) nach einem der vorhergehenden Ansprüche, **dadurch gekennzeichnet, dass** der Magnetanker (20) und/oder Ventilschieber (8) entlang einer Axialrichtung (100) bewegbar sind, wobei der Polkern (9) bezüglich der Axialrichtung (100) nicht über Flansch (5) vorsteht.

## Claims

1. Electrohydraulic pressure control valve (1), having
- a valve housing (4) having a flange (5) which is designed to be flanged to an apparatus (6);
- a solenoid (2) which is disposed within the valve housing (4) and has a pole core (9);
∘ wherein the pole core (9) is disposed within the valve housing (4) and at least in portions bears directly on an internal wall of the valve housing (4);
∘ wherein the pole core (9) closes a flange-proximal opening (21) of the valve housing (4);
∘ wherein formed in the pole core (9) are at least one working port (A), one pressure port (P) and one tank port (T) which are provided for fluidically connecting to the apparatus (6);
∘ wherein the pole core (9) has a plurality of bores (15, 16, 17, 18, 19) which fluidically connect the tank port (T), the pressure port (P) and the working port (A); and
∘ wherein a valve slide (8), by way of which the pressure port (P) and the tank port (T) are able to be selectively connected to the working port (A) and disconnected from the working port (A), is guided in at least one of the bores (15, 16, 17, 18, 19);
- a solenoid armature (20) which is disposed within the valve housing (4) and movable by the solenoid (2), wherein the solenoid armature (20) for movement is operatively coupled to the valve slide (8); and
- a sealing device (7) which
∘ is attached to the pole core (9) and designed to bear on the apparatus (6); and
∘ is designed to seal the connections between the pressure port (P) and/or the tank port (T) and/or the working port (A) and the apparatus (6) in relation to one another and/or in relation to the environment,
**characterized in that**
- the sealing device (7) is designed to seal a contact region between the valve housing (4) and the pole core (9) in such a way that any ingress of fluid between the pole core (9) and the valve housing (4) is prevented.

2. Pressure control valve (1) according to Claim 1, **characterized in that** the pole core (9) on an outer periphery has a bevel (22) or a clearance by way of which is formed a groove (10) that is delimited by the pole core (9) and the valve housing (4), wherein the sealing device (7) is at least partially disposed in the groove (10).

3. Pressure control valve (1) according to Claim 1 or 2, **characterized in that** the pole core (9) is of an integral design.

4. Pressure control valve (1) according to one of the preceding claims, **characterized in that** the sealing device (7) is of an integral design.

5. Pressure control valve (1) according to one of the preceding claims, **characterized in that** the pole core (9) has a groove-shaped seal-guiding region (27) which extends in an annular manner about the working port (A), wherein the sealing device (7) is a least partially disposed in the seal-guiding region (27).

6. Pressure control valve (1) according to one of the preceding claims, **characterized in that** the bores (15, 16, 17, 18, 19) have a first bore (15), a second bore (18) and a third bore (19), wherein the first bore (15) is designed to receive the valve slide (8) and is fluidically connected to the working port (A), wherein the second bore (18) is fluidically connected to the tank port (T), and wherein the third bore (19) is fluidically connected to the pressure port (P).

7. Pressure control valve (1) according to Claim 6, **characterized in that** a first recess (13) and a second recess (14), which is separate from the first recess (13), are formed on the first bore (15), wherein the second bore (18) extends into the first recess (13), wherein the third bore (19) extends into the second recess (14), and wherein preferably the second bore (18) and the third bore (19) are oriented obliquely in relation to the first bore (15).

8. Pressure control valve (1) according to Claim 7, **characterized in that** the second bore (18) has a length between 9.0 mm and 15.0 mm, and/or has an angle between 10° and 30° in relation to the first bore (15), and/or **in that** the third bore (19) has a length between 5.0 mm and 11.0 mm and/or an angle between 20° and 40° in relation to the first bore (15).

9. Pressure control valve (1) according to Claim 8, **characterized in that** the second bore (18) has a length of 11.5 mm and has an angle of 20° in relation to the first bore (15), and/or **in that** the third bore (19) has a length of 7.5 mm and an angle of 30° in relation to the first bore (15).

10. Pressure control valve (1) according to Claim 6, **characterized in that** the bores (15, 16, 17, 18, 19) have a fourth bore (16) for connecting the first bore (15) and the second bore (18), as well as a fifth bore (17) for connecting the first bore (15) and the third bore (19), wherein the second bore (18) and the third bore (19) are oriented parallel to the first bore (15).

11. Pressure control valve (1) according to Claim 10, **characterized in that** the fourth bore (16) and the fifth bore (17) are oriented transversely to the first bore (15), wherein the fourth bore (16) and he fifth bore (17) on an external side of the pole core (9) are closed by a laser-welded seam (24), and wherein closing the fourth bore (16) and the fifth bore (17) is performed by at least one laser-welded seam (24) which is designed for the materially integral connection between the pole core (9) and a pressure sleeve (28) which at least partially encloses the pole core (9).

12. Pressure control valve (1) according to one of the preceding claims, **characterized in that** the valve slide (8) has a first cross section (11) for establishing a fluidic connection between the working port (A) and the tank port (T) or the pressure port (P), as well as a second cross section (12) for fluidically disconnecting the working port (A) from the tank port (T) or from the pressure port (P), wherein the first cross section (12) forms a fluidically negotiable connecting cross section between 2.5 mm² and 5.0 mm².

13. Pressure control valve (1) according to Claim 12, **characterized in that** the first cross section (12) forms a fluidically negotiable connecting cross section of 3.2 mm².

14. Pressure control valve (1) according to one of the preceding claims, **characterized in that** the pole core (9) has a length which is at most 60% of an overall length of the pole core (9) and the solenoid armature (20).

15. Pressure control valve (1) according to one of the preceding claims, **characterized in that** the solenoid armature (20) and/or the valve slide (8) are/is movable along an axial direction (100), wherein the pole core (9) does not project beyond the flange (5) in terms of the axial direction (100).

## Revendications

1. Vanne électrohydraulique (1) de régulation de pression, comprenant
• un boîtier (4) de vanne avec une bride (5), qui est conçu pour être monté par bride sur un appareil (6),
• un électroaimant (2) avec un noyau polaire (9) agencé à l'intérieur du boîtier (4) de vanne,
∘ le noyau polaire (9) étant agencé à l'intérieur du boîtier (4) de vanne et s'appliquant directement, au moins partiellement, contre une paroi intérieure du boîtier (4) de vanne,
∘ le noyau polaire (9) fermant une ouverture (21) côté bride du boîtier (4) de vanne,
∘ au moins un raccord de travail (A), un raccord de pression (P) et un raccord de réservoir (T) étant formés dans le noyau polaire (9), lesquels sont prévus pour la liaison fluidique avec l'appareil (6),
∘ le noyau polaire (9) présentant une pluralité d'alésages (15, 16, 17, 18, 19) qui sont reliés de manière fluidique au raccord de réservoir (T), au raccord de pression (P) et au raccord de travail (A), et
∘ un tiroir de vanne (8) étant guidé au moins dans l'un des alésages (15, 16, 17, 18, 19), par lequel le raccord de pression (P) et le raccord de réservoir (T) sont aptes sélectivement à être reliés au raccord de travail (A) et à être séparés du raccord de travail (A),
• une armature magnétique (20) agencée à l'intérieur du boîtier (4) de vanne et apte à être déplacée par l'électroaimant (2), l'armature magnétique (20) étant reliée en mouvement avec le tiroir de vanne (8), et
• un dispositif d'étanchéité (7) qui
∘ est monté sur le noyau polaire (9) et est conçu pour être appliqué contre l'appareil (6), et
∘ est conçu pour assurer l'étanchéité des connexions du raccord de pression (P) et/ou du raccord de réservoir (T) et/ou du raccord de travail (A) avec l'appareil (6) les uns par rapport aux autres et/ou par rapport à l'environnement, **caractérisée en ce que**
• le dispositif d'étanchéité (7) est conçu de façon à rendre étanche une zone de contact entre le boîtier (4) de vanne et le noyau polaire (9), de sorte qu'une pénétration de fluide entre le noyau polaire (9) et le boîtier (4) de vanne soit empêchée.

2. Vanne (1) de régulation de pression selon la revendication 1, **caractérisée en ce que** le noyau polaire (9) présente sur un bord extérieur un chanfrein (22) ou un évidement par lequel est formée une rainure (10) délimitée par le noyau polaire (9) et le boîtier de vanne (4), le dispositif d'étanchéité (7) étant agencé au moins partiellement dans la rainure (10).

3. Vanne (1) de régulation de pression selon la revendication 1 ou la revendication 2, **caractérisée en ce que** le noyau polaire (9) est réalisé en une seule pièce.

4. Vanne (1) de régulation de pression selon l'une des revendications précédentes, **caractérisée en ce que** le dispositif d'étanchéité (7) est réalisé en une seule pièce.

5. Vanne (1) de régulation de pression selon l'une des revendications précédentes, **caractérisée en ce que** le noyau polaire (9) présente une zone (27) de guidage d'étanchéité en forme de rainure qui s'étend de manière annulaire autour du raccord de travail (A), le dispositif d'étanchéité (7) étant agencé au moins partiellement dans la zone (27) de guidage d'étanchéité.

6. Vanne (1) de régulation de pression selon l'une des revendications précédentes, **caractérisée en ce que** les alésages (15, 16, 17, 18, 19) présentent un premier alésage (15), un deuxième alésage (18) et un troisième alésage (19), le premier alésage (15) étant conçu pour recevoir le tiroir de vanne (8) et étant en communication fluidique avec le raccord de travail (A), le deuxième alésage (18) étant en communication fluidique avec le raccord de réservoir (T) et le troisième alésage (19) étant en communication fluidique avec le raccord de pression (P).

7. Vanne (1) de régulation de pression selon la revendication 6, **caractérisée en ce qu'**une première extension alésée (13) et une deuxième extension alésée (14) séparée de la première extension alésée (13) sont formées sur le premier alésage (15), le deuxième alésage (18) s'étendant jusque dans la première extension alésée (13), le troisième alésage (19) s'étendant jusque dans la deuxième extension alésée (14), et de préférence le deuxième alésage (18) et le troisième alésage (19) étant orientés en biais par rapport au premier alésage (15).

8. Vanne (1) de régulation de pression selon la revendication 7, **caractérisée en ce que** le deuxième alésage (18) présente une longueur comprise entre 9,0 mm et 15,0 mm et/ou un angle compris entre 10° et 30° par rapport au premier alésage (15), et/ou **en ce que** le troisième alésage (19) présente une longueur comprise entre 5,0 mm et 11,0 mm et/ou un angle compris entre 20° et 40° par rapport au premier alésage (15).

9. Vanne (1) de régulation de pression selon la revendication 8, **caractérisée en ce que** le deuxième alésage (18) présente une longueur de 11,5 mm, et/ou un angle de 20° par rapport au premier alésage (15), et/ou **en ce que** le troisième alésage (19) présente une longueur de 7,5 mm, et/ou un angle de 30° par rapport au premier alésage (15).

10. Vanne (1) de régulation de pression selon la revendication 6, **caractérisée en ce que** les alésages (15, 16, 17, 18, 19) comprennent un quatrième alésage (16) pour relier le premier alésage (15) et le deuxième alésage (18) et un cinquième alésage (17) pour relier le premier alésage (15) et le troisième alésage (19), le deuxième alésage (18) et le troisième alésage (19) étant orientés parallèlement au premier alésage (15).

11. Vanne (1) de régulation de pression selon la revendication 10, **caractérisée en ce que** le quatrième alésage (16) et le cinquième alésage (17) sont orientés transversalement au premier alésage (15), le quatrième alésage (16) et le cinquième alésage (17) étant fermés sur un côté extérieur du noyau polaire (9) par un cordon de soudure laser (24), et la fermeture du quatrième alésage (16) et du cinquième alésage (17) étant réalisée par au moins un cordon de soudure laser (24), qui est conçu pour la liaison par matière du noyau polaire (9) et d'un manchon de pression (28) entourant au moins partiellement le noyau polaire (9).

12. Vanne (1) de régulation de pression selon l'une des revendications précédentes, **caractérisée en ce que** le tiroir de vanne (8) présente une première section transversale (11) pour établir une liaison fluidique du raccord de travail (A) avec le raccord de réservoir (T) ou avec le raccord de pression (P) ainsi qu'une deuxième section transversale (12) pour la séparation fluidique du raccord de travail (A) par rapport au raccord de réservoir (T) ou du raccord de pression (P), la première section transversale (12) formant une section transversale de liaison apte à être traversée par le fluide, comprise entre 2,5 mm² et 5,0 mm².

13. Vanne (1) de régulation de pression selon la revendication 12, **caractérisée en ce que** la première section transversale (12) forme une section transversale de liaison apte à être traversée par le fluide, de 3,2 mm².

14. Vanne (1) de régulation de pression selon l'une des revendications précédentes, **caractérisée en ce que** le noyau polaire (9) présente une longueur qui représente au maximum 60% d'une longueur totale du noyau polaire (9) et de l'armature magnétique (20).

15. Vanne (1) de régulation de pression selon l'une des revendications précédentes, **caractérisée en ce que** l'armature magnétique (20) et/ou le tiroir de vanne (8) sont mobiles le long d'une direction axiale (100), le noyau polaire (9) ne dépassant pas de la bride (5) par rapport à la direction axiale (100).
